# EUROPEAN PATENT APPLICATION

(11) **EP 4 628 224 A1**
(43) Date of publication of application: **08.10.2025**
(21) Application number: 23907896.7
(22) Date of filing: 22.12.2023
(51) Int. Cl.: B05C 5/02, H01M 4/04, B05C 11/10

(54) **SPACER SHIM, SLOT DIE COATER AND COATING METHOD USING SAME**

(30) Priority: 23.12.2022 KR 20220183772
(71) Applicant: LG Energy Solution, Ltd., Seoul 07335 (KR)
(72) Inventor: PARK, Seung-Seo, Daejeon 34122 (KR); AHN, Byoung-Hoon, Daejeon 34122 (KR); LEE, Hye-Ji, Daejeon 34122 (KR); JANG, Ji-Woong, Daejeon 34122 (KR)
(74) Representative: Goddar, Heinz J.
(86) International application number: PCT/KR2023/021504
(87) International publication number: WO 2024/136613

(57) **Abstract**

Disclosed is a spacer shim, a slot die coater, and a coating method using the same. The spacer shim includes a plate-shaped shim body with predetermined width, length, and thickness; and a flow path having a groove indented in the thickness direction on one surface of the shim body. The flow path include an inflow trench into which a coating solution is introduced in the thickness direction; a first discharge trench and a second discharge trench arranged to be spaced apart in the width direction to independently discharge a coating solution in the length direction; a first bending trench and a second bending trench configured to branch from one side and the other side of the inflow trench, respectively, and extend along the width direction and the length direction; and a first connection trench and a second connection trench configured to extend from the first bending trench and the second bending trench in the length direction, respectively, and communicate with the first discharge trench and the second discharge trench.

## Description

### TECHNICAL FIELD

The present disclosure relates to a spacer shim, a slot die coater, and a coating method using the same, and more particularly, to a spacer shim with an improved flow path structure to improve coating quality, a slot die coater including the spacer shim, and a coating method using the slot die coater.

The present application claims priority to Korean Patent Application No. 10-2022-0183772 filed on December 23, 2022 in the Republic of Korea, the disclosures of which are incorporated herein by reference.

### BACKGROUND ART

A slot die coater is widely used to coat an active material or an insulating material on a battery electrode plate. The slot die coater includes a spacer shim interposed between two slot die blocks.

The spacer shim forms a flow path inside the slot die coater. The flow path includes an inflow flow path through which a coating solution is introduced from the outside, a discharge flow path through which a coating solution is sprayed to the outside, and a connection flow path through which the inflow flow path communicates with the discharge flow path.

The design of the flow path structure of the spacer shim affects coating quality. If the design of the flow path is not optimized, the coating quality deteriorates, and also foreign substances may flow deep into the slot die coater during the process of cleaning the lip of the slot die coater.

### DISCLOSURE

### Technical Problem

The present disclosure is designed to solve the problems of the related art, and therefore the present disclosure is directed to providing a spacer shim with an improved flow path structure to improve coating quality.

The present disclosure is also directed to providing a slot die coater including the improved spacer shim.

The present disclosure is also directed to providing a coating method using the slot die coater including the improved spacer shim.

### Technical Solution

In one aspect of the present disclosure, there is provided a spacer shim, comprising: a plate-shaped shim body with predetermined width, length, and thickness; and a flow path having a groove indented in a thickness direction on one surface of the shim body.

The flow path may include an inflow trench into which a coating solution is introduced in the thickness direction; a first discharge trench and a second discharge trench arranged to be spaced apart in a width direction to independently discharge a coating solution in a length direction; a first bending trench and a second bending trench configured to branch from one side and the other side of the inflow trench, respectively, and extend along the width direction and the length direction; and a first connection trench and a second connection trench configured to extend from the first bending trench and the second bending trench in the length direction, respectively, and communicate with the first discharge trench and the second discharge trench.

The first discharge trench and the first connection trench may be spaced apart in the width direction and do not overlap each other along the length direction, and the second discharge trench and the second connection trench may be spaced apart from each other in the width direction and do not overlap each other along the length direction.

When an average flow path width of the first bending trench and an average flow path width of the second bending trench are defined as a first flow path width, an average flow path width of the first connection trench and an average flow path width of the second connection trench are defined as a second flow path width, and an average flow path width of the first discharge trench and an average flow path width of the second discharge trench are defined as a third flow path width, the first flow path width may be larger than the second flow path width, and the second flow path width may be larger than the third flow path width.

When a maximum separation distance of the first bending trench and the second bending trench in the width direction is defined as a first separation distance, a maximum separation distance of the first connection trench and the second connection trench in the width direction is defined as a second separation distance, and a maximum separation distance between the first discharge trench and the second discharge trench in the width direction is defined as a third separation distance, the first separation distance may be smaller than the second separation distance, and the second separation distance may be smaller than the third separation distance.

The flow path may further include a bridge trench, one end of the bridge trench may be interposed between the first discharge trench and the first connection trench, and the other end of the bridge trench may be interposed between the second discharge trench and the second connection trench.

A flow path width of the bridge trench may be larger than a flow path width of the first discharge trench and the second discharge trench.

A depth of the bridge trench may be substantially equal to a depth of the first discharge trench and a depth of the second discharge trench.

The flow path may further include a bridge trench, one end of the bridge trench may communicate with the first connection trench, and the other end of the bridge trench may communicate with the second connection trench.

A flow path width of the bridge trench may be smaller than a flow path width of the first connection trench and a flow path width of the second connection trench.

The bridge trench may communicate at a same depth with the first connection trench and the second connection trench.

The bridge trench may substantially intersect perpendicularly the first discharge trench and the second discharge trench, and a flow path width of the intersection portion may gradually decrease toward the discharge trench.

The flow path of the intersection portion may have a structure where an inner perpendicular corner and an outer round corner face each other.

The first connection trench and the second connection trench may include a first section with a first average depth, a second section with a second average depth, and a third section with a third average depth, respectively, along the length direction of the shim body, the first average depth may be greater than the second average depth, and the second average depth may be greater than the third average depth.

The first section and the third section may have substantially the same trench depth along a flow direction of the coating solution, respectively, and the second section may have a trench depth gradually decreasing along the flow direction of the coating solution.

A trench depth of the third section may be substantially equal to a depth of the first discharge trench and the second discharge trench.

The trenches that constitute the flow path may have a round bottom when viewed in a cross section perpendicular to a flow direction of the coating solution.

The spacer shim according to the present disclosure may have at least one fastening hole penetrating the shim body not to overlap the flow path.

The spacer shim according to the present disclosure may include a coating layer formed on an exposed surface of the flow path in the thickness direction of the shim body.

The coating layer may contain polytetrafluoroethylene.

In another aspect of the present disclosure, there is also provided a slot die coater, comprising: at least one spacer shim described above; a first slot die block coupled to one side of the shim body to face an exposed surface of the flow path in the thickness direction of the shim body; a second slot die block coupled to the other side of the shim body to face the first slot die block; and a coating solution supply unit configured to communicate with the inflow trench of the spacer shim.

The slot die coater according to the present disclosure may include at least one pump configured to independently supply a coating solution through a coating solution supply unit communicated with the inflow trench of each spacer shim.

In another aspect of the present disclosure, there is also provided a coating method comprising: preparing a substrate having a pair of short sides and a pair of long sides extending between the pair of short sides; forming a plurality of first coating layers at predetermined intervals on one surface of the substrate along the long side direction, so that a band-shaped uncoated portion extending along the long side direction is formed between the first coating layers adjacent in the short side direction; preparing the slot die coater described above; and forming a second coating layer along the long side direction to cover a boundary between each first coating layer and the uncoated portion adjacent thereto to a predetermined width using the slot die coater.

The second coating layer may be formed simultaneously as a pair at the boundary between the uncoated portion and the pair of first coating layers facing the uncoated portion.

In the coating method according to the present disclosure, the substrate may be a metal foil current collector, the first coating layer may be an active material coating layer, and the second coating layer may be an insulating coating layer.

### Advantageous Effects

According to one aspect of the present disclosure, the coating quality, especially the uniformity of coating width, may be enhanced by improving the flow path structure of the spacer shim.

According to another aspect of the present disclosure, it is possible to prevent foreign substances from entering the slot die coater during the process of cleaning the lip of the slot die coater.

According to still another aspect of the present disclosure, when a second coating layer is formed at the boundary between each first coating layer and the uncoated portion while a substrate on which a plurality of first coating layers having a strip shape are formed at regular intervals with the uncoated portion interposed therebetween is being transferred, the width of the second coating layer may be maintained uniformly in a direction perpendicular to the transfer direction.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a spacer shim according to an embodiment of the present disclosure.
FIG. 2 is a cross-sectional view, taken along line A-A' in FIG. 1.
FIG. 3 is a cross-sectional view, taken along line B-B' in FIG. 1.
FIG. 4 is a partial enlarged view showing a dotted circle portion at the right side of FIG. 1.
FIG. 5 is a plan view showing the structure of a spacer shim according to another embodiment of the present disclosure.
FIG. 6 is a cross-sectional view showing the configuration of a slot die coater according to an embodiment of the present disclosure.
FIG. 7 is a plan view showing the slot die coater according to an embodiment of the present disclosure.
FIG. 8 is a process diagram conceptually showing a coating method according to an embodiment of the present disclosure.
FIG. 9 is a photograph showing a current collector immediately after forming a positive electrode active material layer and an insulating coating layer on one surface of the current collector made of an aluminum foil using a slot die coater including a spacer shim according to a comparative example of the present disclosure.
FIG. 10 is a photograph showing a current collector immediately after forming a positive electrode active material layer and an insulating coating layer on the current collector made of an aluminum foil using the slot die coater including the spacer shim according to an embodiment of the present disclosure.
FIG. 11 is a graph showing the results of measuring an average thickness of an insulating coating layer for each uncoated portion line when a total of 6 pairs of insulating coating layers are formed in a total of 6 uncoated portion lines by the slot die coaters used in the comparative example and the example of the present disclosure after 7 lines of positive electrode active material layers with a width of 125.5 mm are coated on one surface of an aluminum current collector at 10 mm intervals.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

Hereinafter, when an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Singular expressions used in this specification include plural expressions unless the context clearly indicates otherwise. In this application, terms such as "including" or "comprising" should not be construed as necessarily including all of the various components or steps described in the specification, and it should be construed that some of the components or some of the steps may not be included, or additional components or steps may be further included.

Also, singular expressions used in this specification include plural expressions unless the context clearly indicates otherwise. In this application, terms such as "including" or "comprising" should not be construed as necessarily including all of the various components or steps described in the specification, and it should be construed that some of the components or some of the steps may not be included, or additional components or steps may be further included.

Throughout the specification, "A and/or B" refers to either A or B or both A and B unless expressly stated otherwise, and "C to D" refers to C or greater and D or smaller unless expressly stated otherwise.

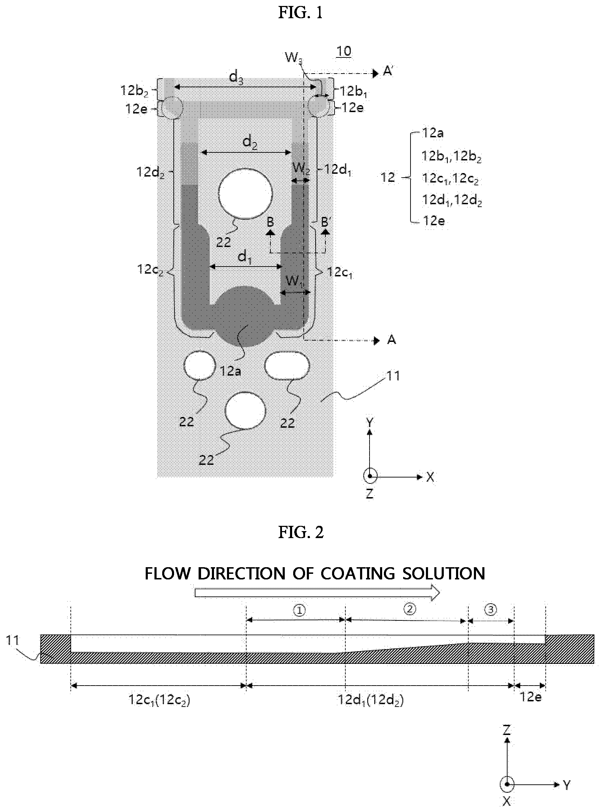

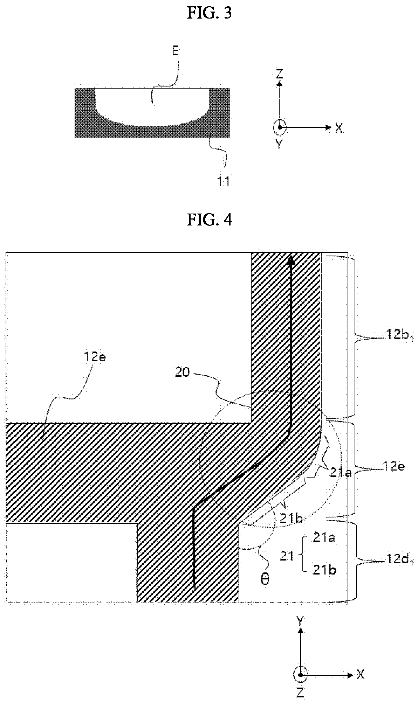

FIG. 1 is a plan view showing a spacer shim according to an embodiment of the present disclosure, FIG. 2 is a cross-sectional view, taken along line A-A' in FIG. 1, FIG. 3 is a cross-sectional view, taken along line B-B' in FIG. 1, and FIG. 4 is a partial enlarged view showing a dotted circle portion at the right side of FIG. 1.

Referring to FIGS. 1 to 4, the spacer shim 10 according to an embodiment of the present disclosure may include a plate-shaped shim body 11 with a predetermined width, length, and thickness, and a flow path 12 formed by a groove indented in a thickness direction from one surface of the shim body 11.

In the drawings, a three-dimensional coordinate system is indicated for convenience of explanation. The X axis is a width direction of the shim body 11, the Y axis is a length direction of the shim body 11, and the Z axis is a thickness direction of the shim body 11.

In FIG. 1, the shading of the flow path 12 represents a depth difference in the thickness direction Z. The darker the shading, the deeper the depth in the thickness direction Z. Also, the depth in the thickness direction Z may be substantially the same in an area where the shading is the same. The depth of the flow path 12 may be a maximum depth at the measurement location.

The flow path 12 may have a left-right symmetrical structure based on the length direction Y. The flow path 12 may have a trench structure indented along the thickness direction Z from one surface of the shim body 11. The trench may be a kind of groove.

The flow path 12 may include an inflow trench 12a into which a coating solution is introduced in the thickness direction Z, a first discharge trench 12b₁ and a second discharge trench 12bz arranged to be spaced apart in the width direction X and configured to independently discharge a coating solution in the length direction Y, a first bending trench 12c₁ and a second bending trench 12c₂ branched from one side and the other of the inflow trench 12a, respectively, and configured to extend along the width direction X and the length direction Y, and a first connection trench 12di and a second connection trench 12d₂ configured to extend from the first bending trench 12c₁ and the second bending trench 12c₂ in the length direction Y, respectively, and directly or indirectly connected to the first discharge trench 12b₁ and the second discharge trench 12b₂.

When an average flow path width of the first bending trench 12c₁ and an average flow path width of the second bending trench 12c₂ are defined as a first flow path width, an average flow path width of the first connection trench 12d₁ and an average flow path width of the second connection trench 12d₂ are defined as a second flow path width, and an average flow path width of the first discharge trench 12bi and an average flow path width of the second discharge trench 12b₂ are defined as a third flow path width, the first flow path width may be larger than the second flow path width, and the second flow path width may be larger than the third flow path width.

The average flow path width refers to an average value of the lengths of line segments located within the trench when the line segments are drawn on the same plane as the surface of the shim body 11 in a direction perpendicular to the direction in which the coating solution flows at multiple points in the trench section. The multiple points may be selected, for example, at every 0.5 mm. In the drawings, W₁, W₂, and W₃ illustrate the lengths of line segments drawn at specific points in each trench section.

In a specific example, the first flow path width may be 4 mm ± 0.5 mm, the second flow path width may be 2 mm ± 0.5 mm, and the third flow path width may be 1.3 mm ± 0.5 mm.

When a maximum separation distance di of the first bending trench 12c₁ and the second bending trench 12c₂ in the width direction is defined as a first separation distance, a maximum separation distance d₂ of the first connection trench 12d₁ and the second connection trench 12d₂ in the width direction is defined as a second separation distance, and a maximum separation distance d₃ of the first discharge trench 12b₁ and the second discharge trench 12b₂ in the width direction is defined as a third separation distance, the first separation distance d₁ may be smaller than the second separation distance d₂, and the second separation distance d₂ may be smaller than the third separation distance d₃.

In a specific example, the first separation distance may be 10 mm ± 2 mm, the second separation distance may be 14 mm ± 1.5 mm, and the third separation distance may be 17 mm ± 1.0 mm.

The flow path 12 may further include a bridge trench 12e.

One end in the width direction X of the bridge trench 12e may be interposed between the first discharge trench 12bi and the first connection trench 12d₁. Also, the other end in the width direction X of the bridge trench 12e may be interposed between the second discharge trench 12b₂ and the second connection trench 12d₂.

Therefore, the first discharge trench 12b₁ and the first connection trench 12di may be indirectly connected to each other through one end of the bridge trench 12e. Also, the second discharge trench 12b₂ and the second connection trench 12d₂ may be indirectly connected to each other through the other end of the bridge trench 12e.

The depth of the bridge trench 12e may be substantially equal to the depth of the first discharge trench 12b₁ and the depth of the second discharge trench 12b₂.

The flow path width of the bridge trench 12e may be relatively larger than the flow path width of the first discharge trench 12bi and the flow path width of the second discharge trench 12b₂.

The flow path width of the bridge trench 12e may be relatively smaller than the flow path width of the first connection trench 12d₁ and the flow path width of the second connection trench 12d₂.

The above-described design of the flow path width and the depth of the bridge trench 12e may improve coating quality by substantially equally increasing the flow path pressures of the first discharge trench 12b₁ and the second discharge trench 12b₂.

The bridge trench 12e may substantially intersect perpendicularly the first discharge trench 12b₁ and the second discharge trench 12b₂.

Referring to FIG. 4, the flow path width of the perpendicular intersection portion (dotted circle) may gradually decrease toward the first discharge trench 12b₁ and the second discharge trench 12b₂.

In addition, the flow path of the perpendicular intersection portion (dotted circle) may have a structure in which an inner perpendicular corner 20 and an outer round corner 21 face each other.

Referring to FIG. 2, the first connection trench 12di and the second connection trench 12d₂ may include a first section (①) with a first average depth, a second section (②) with a second average depth, and a third section (③) with a third average depth, respectively, where the first average depth may be greater than the second average depth, and the second average depth may be greater than the third average depth.

The first section (①) and the third section (③) may respectively have substantially the same trench depth along the flow direction of the coating solution, and the second section (②) may have a trench depth gradually decreasing along the flow direction of the coating solution.

The trench depth may be measured at the lowest point with the lowest depth (for example, a center point of the floor in the cross-sectional view of the trench illustrated in FIG. 3) based on each measurement point of the flow path.

The trench depth of the third section (③) may be substantially equal to the depth of the first discharge trench 12b₁ and the second discharge trench 12b₂.

The trench depth of the third section (③) may be substantially equal to the depth of the bridge trench 12e.

The depth of the first bending trench 12c₁ and the second bending trench 12c₂ may be substantially equal to the depth of the first section (①).

In one embodiment, the ratio of the depth of the third section (③) to the depth of the first section (①) may be 60% or less, 50% or less, 40% or less, 30% or less, or 20% or less.

In one embodiment, the ratio of the depth of the first section (①) to the thickness of the shim body 11 may be 80% or less, 70% or less, 60% or less, 50% or less, 40% or less, or 30% or less.

In one embodiment, the slope (ΔZ/ΔY) of the second section (②) may be 0.07 or less, 0.05 or less, 0.04 or less, 0.03 or less, and 0.02 or less. Here, ΔZ is a change amount in the Z-axis direction, and ΔY is a change amount in the Y-axis direction.

In a specific example, the thickness of the shim body 11 may be 1.5 mm, the depth of the first section (①) may be 1.0 mm, the depth of the third section (③) may be 0.5 mm, and the Y-axis directional length of the second section (②) may be 10 mm, and the slope (ΔZ/ΔY) of the second section (②) may be 0.05.

Referring to FIG. 3, the trenches constituting the flow path 12 may have a round bottom when viewed from a cross section E cut perpendicular to the direction in which the coating solution flows. If the bottom of the trench has a round shape, the coating quality may be improved by preventing the coating solution from stagnating in an area where the flow of the coating solution is weak.

In the spacer shim 10, since the depth of the flow path decreases gradually or stepwise along the direction in which the coating solution flows, the pressure of the flow path increases toward the first discharge trench 12b₁ and the second discharge trench 12b₂. Also, the bridge trench 12e equalizes the flow path pressure of the first discharge trench 12b₁ and the second discharge trench 12b₂. Therefore, the spacer shim 10 may improve the uniformity of coating quality. In particular, it is possible to minimize the coating width deviation between the coating layer formed by the coating solution discharged from the first discharge trench 12bi and the coating layer formed by the coating solution discharged from the second discharge trench 12b₂.

Referring to FIG. 4, the bridge trench 12e intersects perpendicularly the first connection trench 12d₁ and the first discharge trench 12b₁.

In the perpendicular intersection portion (dotted circle), the flow path width gradually decreases along the direction (arrow direction) in which the coating solution flows.

The perpendicular intersection portion (dotted circle) may have a structure in which the inner perpendicular corner 20 and the outer round corner 21 face each other when the spacer shim 10 is viewed in the Z-axis direction.

The round corner 21 may include a curved portion 21a having a radius of curvature when the spacer shim 10 is viewed in the Z-axis direction, and a straight portion 21b smoothly connected to the curved portion 21a.

The angle (0) formed between the straight portion 21b and the outer line of the first connection trench 12d₁ may be 110 to 130 degrees.

Due to the perpendicular intersection portion (dotted circle), the first discharge trench 12b₁ is spaced outward from the first connection trench 12d₁ along the width direction X. Therefore, the coating solution passing through the first connection trench 12d₁ does not move directly to the first discharge trench 12bi, but moves to the first discharge trench 12bi via the perpendicular intersection portion (dotted circle). This coating solution flow mechanism may prevent coating quality from being deteriorated due to pulsation generated by the motor of the pump that supplies the coating solution. In addition, since the first discharge trench 12b₁ is not directly connected to the first connection trench 12d₁, it is possible to prevent foreign substances from deeply penetrating into the spacer shim 10 during the process of cleaning the lip of the slot die coater including the spacer shim 10. If the penetration of foreign substances is prevented, the deterioration of coating quality caused by foreign substances may be prevented.

The structure shown in FIG. 4 may be applied in substantially the same way to the portion where the bridge trench 12e intersects the second connection trench 12d₂ and the second discharge trench 12bz due to the left-right symmetrical structure of the spacer shim 10.

Referring to FIG. 1 again, the spacer shim 10 may have at least one fastening hole 22 penetrating the shim body 11 not to overlap the flow path 12.

The fastening hole 22 may be used when installing the spacer shim 10 to the slot die coater. The inner peripheral surface of the fastening hole 22 may be provided with a thread for fastening a bolt.

At least one fastening hole 22 may be provided in the inner area of the shim body 11 surrounded by the first bending trench 12c₁, the first connection trench 12di, the bridge trench 12e, the second connection trench 12d₂, the first bending trench 12c₂, and the inflow trench 12a.

At least two fastening holes 22 may be provided in areas other than the inner area of the shim body 11.

To reduce contamination, a part or all of the exposed surface of the flow path 12 may be provided with a coating layer with a low surface friction coefficient. In one example, the coating layer may contain polytetrafluoroethylene (PTFE). It is not limited that the coating layer is further formed on the exposed surface of the shim body 11.

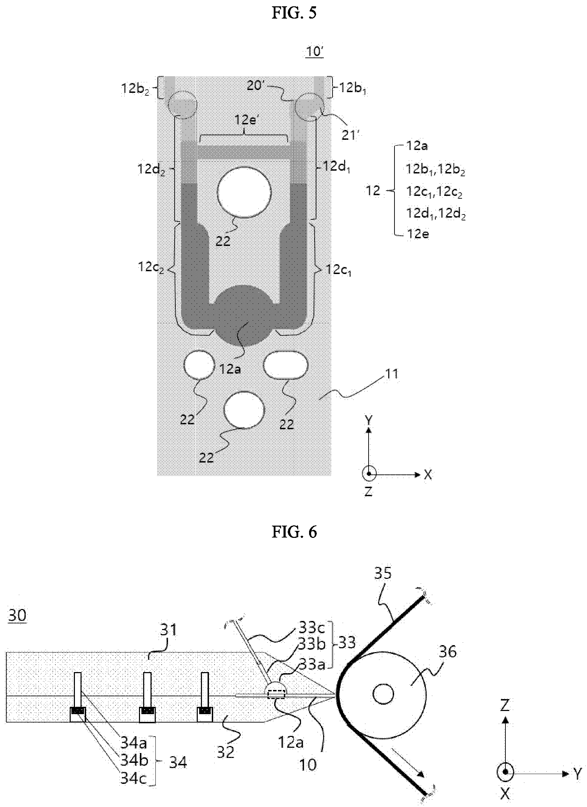

FIG. 5 is a plan view showing the structure of a spacer shim 10' according to another embodiment of the present disclosure.

Referring to FIG. 5, the spacer shim 10' may include a bridge trench 12e' of a different structure. One end of the bridge trench 12e' may be connected to the first connection trench 12di, and the other end of the bridge trench 12e may be connected to the second connection trench 12d₂. It is desirable to design the connection point of the bridge trench 12e' close to the first discharge trench 12b₁ and the second discharge trench 12b₂.

The depth of the bridge trench 12e may be substantially equal to the depth of the first connection trench 12di and the second connection trench 12d₂ at the point connected to the first connection trench 12di and the second connection trench 12d₂.

In the spacer shim 10', the first connection trench 12d₁ and the first discharge trench 12bi may be directly connected to each other, and the second connection trench 12d₂ and the second discharge trench 12b₂ may be directly connected to each other.

The first connection trench 12d₁ and the first discharge trench 12bi are not located on the same line along the length direction Y, and the second connection trench 12d₂ and the second discharge trench 12b₂ are also not located on the same line along the length direction Y. This structure is substantially equal to the spacer shim 10 described above.

The connection portion of the first connection trench 12di and the first discharge trench 12bi and the connection portion of the second connection trench 12dz and the second discharge trench 12b₂ may have a structure where the inner perpendicular corner 20' and the outer round corner 21' face each other. The inner perpendicular corner 20 may have a chamfered corner. The shape of the outer round corner 21' may be substantially equal to the corresponding structure shown in FIG. 4.

The flow path width of the bridge trench 12e' may be relatively smaller than the flow path width of the first connection trench 12d₁ and the second connection trench 12d₂.

The flow path width and depth design of the bridge trench 12e' as above increases the flow path pressure of the first discharge trench 12b₁ and the second discharge trench 12b₂ substantially identically, thereby improving coating quality.

The spacer shim 10, 10' according to an embodiment of the present disclosure may be included in a slot die coater.

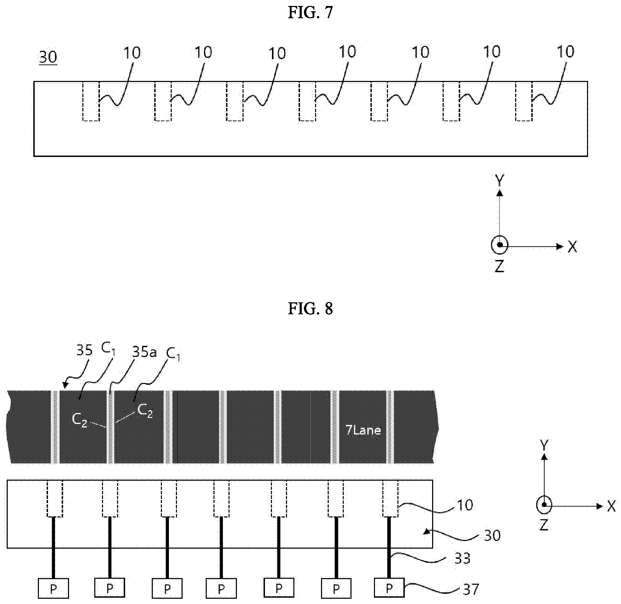

FIG. 6 is a cross-sectional view showing the configuration of a slot die coater 30 according to an embodiment of the present disclosure, and FIG. 7 is a plan view showing the slot die coater 10 according to an embodiment of the present disclosure.

Referring to FIG. 6, the slot die coater 30 may include the spacer shim 10 described above. The spacer shim 10 may be replaced with the spacer shim 10' according to another embodiment.

The slot die coater 30 may also include a first slot die block 31 coupled to one side of the shim body 11 of the spacer shim 10 to face the exposed surface of the flow path 12 of the spacer shim 10, and a second slot die block 32 coupled to the other side of the shim body 11 to face the first slot die block 31.

The first slot die block 31 may include a coating solution supply unit 33 that communicates with the inflow trench 12a of the spacer shim 10.

The coating solution supply unit 33 may include a coating solution introduction chamber 33a indented in the thickness direction of the first slot die block 31, a coating solution inflow hole 33b communicating with the coating solution introduction chamber 33a and perforated in the thickness direction of the first slot die block 31, and a coating solution supply pipe 33c having one end connected to the coating solution inflow hole 33b and the other end connected to a pump (not shown).

The first slot die block 31 and the second slot die block 32 may be coupled by at least one bolt fastening structure 34.

The bolt fastening structure 34 may have a bolt fastening hole 34a formed in the first slot die block 31 and having a thread formed on an inner peripheral surface thereof, a bolt guide hole 34b formed in the second slot die block 32 to guide bolt insertion from the outside, and a bolt 34c inserted through the bolt guide hole 34b and coupled to the bolt fastening hole 34a.

The detailed structure of the bolt fastening structure 34 is not limited to the embodiment. The bolt fastening hole 34a may be formed in the second slot die block 32, and the bolt guide hole 34b may be formed in the first slot die block 31. In addition, various bolt fastening structures known in the art may be employed.

The first slot die block 31 and the second slot die block 32 may be coupled to each other through other mechanical methods such as welding besides the bolt fastening method.

Referring to FIG. 7, the slot die coater 30 may include a plurality of spacer shims 10. The plurality of spacer shims 10 may be arranged at regular intervals along the X-axis direction.

The slot die coater 30 may simultaneously form a number of coating layers corresponding to 2 × the quantity of spacer shims 10 on the surface of the substrate 35 (FIG. 6), which moves in the Y-axis direction, along the moving direction of the substrate 35. In one example, when the number of spacer shims 10 is 7, 14 coating layers may be formed simultaneously on the surface of the substrate 35.

The substrate 35 may be transferred in close contact with a roller 36, as shown in FIG. 6, and the slot die coater 30 may continuously form a coating layer on the surface of the substrate 35, which is transferred in close contact with the roller 36. The slot die coater 30 may improve coating quality by uniformly forming the width of the coating layer in a direction perpendicular to the transfer direction of the substrate 35.

Below, the coating method using the slot die coater 30 will be described.

FIG. 8 is a process diagram conceptually showing a coating method according to an embodiment of the present disclosure.

First, a substrate 35 having a pair of short sides and a pair of long sides extending between the pair of short sides is prepared. The short side extends in the X-axis direction, and the long side extends in the Y-axis direction. The drawing shows only a portion of the substrate 35.

Next, a plurality of first coating layers C₁ are formed on one surface of the substrate 35 along the long side direction Y, and the plurality of first coating layers C₁ are formed at regular intervals along the width direction X. In this step, an uncoated portion 35a extending along the long side direction Y is formed between the first coating layers C₁ adjacent in the width direction X. Here, the uncoated portion 35a refers to an area of the substrate 35 without the first coating layer C₁. The uncoated portion 35a has a strip shape extending in the long side direction Y.

Next, the slot die coater 30 according to an embodiment of the present disclosure is prepared.

Subsequently, as shown in FIG. 6, while transferring the substrate 35 using a roller 36, a second coating layer C₂ covering the boundary between each first coating layer C₁ and the uncoated portion 35a is formed simultaneously along the transfer direction of the substrate 35 using the slot die coater 30.

If the slot die coater 30 includes a plurality of spacer shims 10, the second coating layer C₂ may be formed in a plurality of pairs. The pair of second coating layers C₂ may face each other in the short side direction X with the uncoated portion 35a interposed therebetween.

For example, when the total number of spacer shims 10 is 7, a total of 7 pairs of second coating layers C₂ may be formed on the substrate 35.

The coating solution may be supplied to the slot die coater 30 using a plurality of pumps 37. The number of pumps 37 corresponds to the number of spacer shims 10. Each pump 37 may independently supply a coating solution to each spacer shim 10 through the coating solution supply unit 33. In this case, while the second coating layer C₂ is formed, the spray pressure of the coating solution discharged through the first and second discharge trenches 12b₁, 12b₂ may be maintained uniformly. If the spray pressure of the coating solution is uniform, the width of the coating layer may be formed uniformly along the transfer direction of the substrate 35.

In a preferred embodiment, the substrate 35 may be a metal foil current collector, the first coating layer C₁ may be a coating layer of an electrode active material, and the second coating layer C₂ may be an insulating coating layer.

The metal foil current collector may be a copper foil current collector or an aluminum foil current collector. The electrode active material may be a positive electrode active material or a negative electrode active material known in the art.

Next, a comparative example and an example of the present disclosure are described.

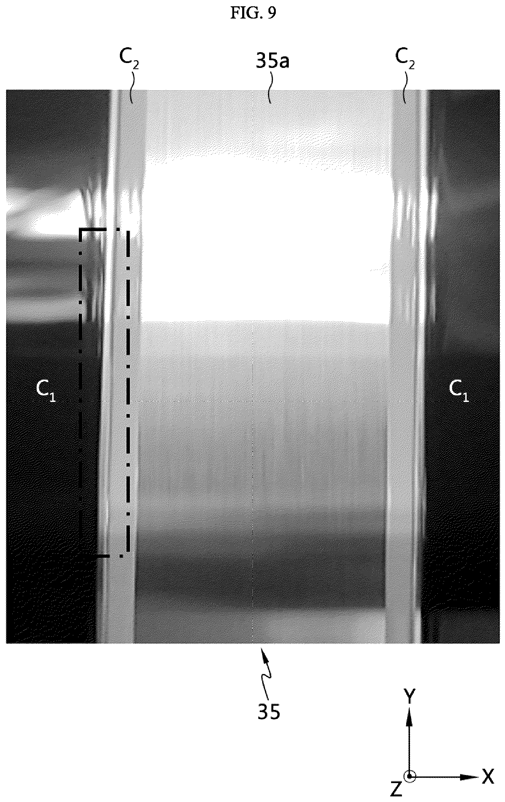

FIG. 9 is a photograph partially showing a current collector 35 immediately after forming a positive electrode active material layer C₁ and an insulating coating layer C₂ on one surface of the current collector 35 made of an aluminum foil using a slot die coater 30 including a spacer shim according to a comparative example of the present disclosure in which the depths of bending trenches 12c₁, 12c₂, the connection trenches 12di, 12d₂, the bridge trench 12e, and the discharge trenches 12b₁, 12b₂ are all designed to have constant depths of 1.0 mm.

Seeing the portion indicated by the dotted box in FIG. 9, some coating sections were confirmed where the insulating coating layer C₂ did not overlap the positive electrode active material layer C₁ and was slightly spaced apart. Therefore, if the depth of the flow path 12 is designed to be constant along the length direction Y of the spacer shim 10, it may be understood that there is a limit to uniformly controlling the width of the coating layer in a direction perpendicular to the transfer direction of the substrate.

For reference, if a section where a part of the insulating coating layer C₂ does not overlap the positive electrode active material layer C₁ appears, the function of the insulating coating layer C₂ cannot be achieved. The current collector 35 may be manufactured as a positive electrode by cutting the center of the uncoated portion 35a. The positive electrode may be used together with a separator and a negative electrode to manufacture a jelly-roll type electrode assembly. In this case, a section in which a part of the insulating coating layer C₂ does not overlap the positive electrode active material layer C₁ may contact the end of the active material of the negative electrode opposing thereto with the separator interposed therebetween, causing an internal short circuit.

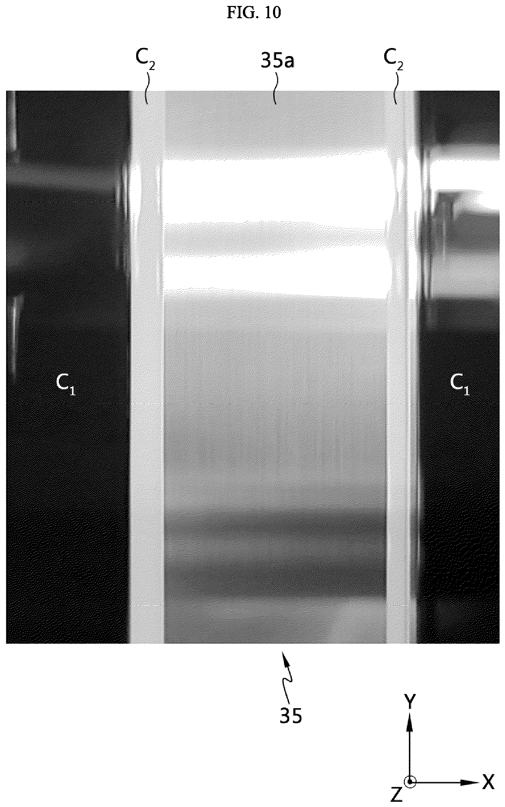

FIG. 10 is a photograph of an example according to the present disclosure, which shows the current collector 35 immediately after forming the positive electrode active material layer C₁ and the insulating coating layer C₂ on the current collector 35 made of an aluminum foil using a slot die coater 30 including a spacer shim 10 in which the depth of bending trenches 12c₁, 12c₂ is designed as 1 mm, the depth of the first section (①) of the connection trenches 12d₁, 12d₂ is designed as 1 mm, and the depth of the third section (③) of the connection trenches 12di, 12d₂ is designed as 0.5 mm, the length of the second section (②) of the connection trenches 12di, 12d₂ is designed as 10 mm, and the depth of the bridge trench 12e and the discharge trenches 12bi, 12b₂ is designed as 0.5 mm.

Referring to FIG. 10, it may be found that the insulating coating layer C₂ is well overlapped with the positive electrode active material layer C₁ at a constant width. In addition, in the entire section of the current collector 35, a coating section in which the insulating coating layer C₂ does not overlap the positive electrode active material layer C₁ and thus is slightly spaced apart is not found. Therefore, it may be understood that when forming a coating layer using the slot die coater 30 including the spacer shim 10 according to the present disclosure, the width of the coating layer may be uniformly formed in a direction perpendicular to the transfer direction of the substrate.

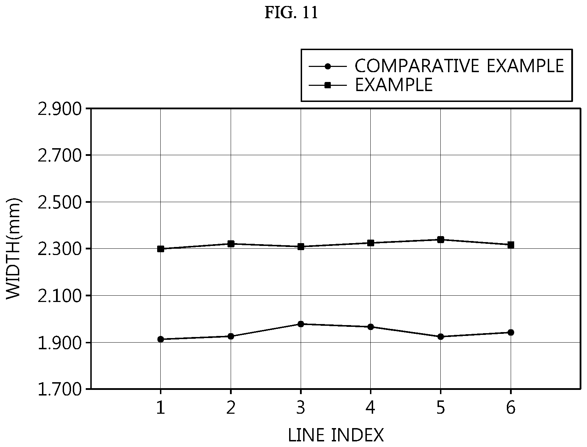

FIG. 11 is a graph showing the results of measuring an average thickness of an insulating coating layer for each uncoated portion line when a total of 6 pairs of insulating coating layers are formed in a total of 6 uncoated portion lines by the slot die coaters used in the comparative example and the example of the present disclosure after 7 lines of positive electrode active material layers with a width of 125.5 mm are coated on one surface of an aluminum current collector at 10 mm intervals.

Referring to FIG. 11, the width of the insulating coating layer of the example is relatively larger than the width of the insulating coating layer of the comparative example. In the example, the flow path depth of the spacer shim 10 is stepwise or gradually reduced along the transfer direction of the coating solution, thereby increasing the spraying pressure of the coating solution. Therefore, it may be found that the present disclosure may increase the controllable width of the coating layer. In addition, the width deviation of each line of the insulating coating layer formed according to the example is smaller than the width deviation of each line of the insulating coating layer formed according to the comparative example. Therefore, in the present disclosure, when forming a plurality of coating layers simultaneously using the slot die coater 30 including a plurality of spacer shims 10, the width deviation of each line of the coating layer may also be minimized.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A spacer shim, comprising:
a plate-shaped shim body with predetermined width, length, and thickness; and
a flow path having a groove indented in a thickness direction on one surface of the shim body,
wherein the flow path includes:
an inflow trench into which a coating solution is introduced in the thickness direction;
a first discharge trench and a second discharge trench arranged to be spaced apart in a width direction to independently discharge a coating solution in the length direction;
a first bending trench and a second bending trench configured to branch from one side and the other side of the inflow trench, respectively, and extend along the width direction and the length direction; and
a first connection trench and a second connection trench configured to extend from the first bending trench and the second bending trench in a length direction, respectively, and communicate with the first discharge trench and the second discharge trench.

2. The spacer shim according to claim 1,
wherein the first discharge trench and the first connection trench are spaced apart in the width direction and do not overlap each other along the length direction, and
wherein the second discharge trench and the second connection trench are spaced apart from each other in the width direction and do not overlap each other along the length direction.

3. The spacer shim according to claim 1,
wherein when an average flow path width of the first bending trench and an average flow path width of the second bending trench are defined as a first flow path width, an average flow path width of the first connection trench and an average flow path width of the second connection trench are defined as a second flow path width, and an average flow path width of the first discharge trench and an average flow path width of the second discharge trench are defined as a third flow path width, and
wherein the first flow path width is larger than the second flow path width, and the second flow path width is larger than the third flow path width.

4. The spacer shim according to claim 1,
wherein when a maximum separation distance of the first bending trench and the second bending trench in the wide direction is defined as a first separation distance, a maximum separation distance of the first connection trench and the second connection trench in the wide direction is defined as a second separation distance, and a maximum separation distance between the first discharge trench and the second discharge trench in the wide direction is defined as a third separation distance, and
wherein the first separation distance is smaller than the second separation distance, and the second separation distance is smaller than the third separation distance.

5. The spacer shim according to claim 1,
wherein the flow path further includes a bridge trench,
wherein one end of the bridge trench is interposed between the first discharge trench and the first connection trench, and
wherein the other end of the bridge trench is interposed between the second discharge trench and the second connection trench.

6. The spacer shim according to claim 5,
wherein a flow path width of the bridge trench is larger than a flow path width of the first discharge trench and the second discharge trench.

7. The spacer shim according to claim 5,
wherein a depth of the bridge trench is substantially equal to a depth of the first discharge trench and a depth of the second discharge trench.

8. The spacer shim according to claim 1,
wherein the flow path further includes a bridge trench,
wherein one end of the bridge trench communicates with the first connection trench, and
wherein the other end of the bridge trench communicates with the second connection trench.

9. The spacer shim according to claim 8,
wherein a flow path width of the bridge trench is smaller than a flow path width of the first connection trench and a flow path width of the second connection trench.

10. The spacer shim according to claim 8,
wherein the bridge trench communicates at a same depth with the first connection trench and the second connection trench.

11. The spacer shim according to claim 5,
wherein the bridge trench substantially perpendicularly intersects the first discharge trench and the second discharge trench, and a flow path width of the intersection portion gradually decreases toward the discharge trench.

12. The spacer shim according to claim 11,
wherein the flow path of the intersection portion has a structure where an inner perpendicular corner and an outer round corner face each other.

13. The spacer shim according to claim 1,
wherein the first connection trench and the second connection trench include a first section with a first average depth, a second section with a second average depth, and a third section with a third average depth, respectively, along the length direction of the shim body,
wherein the first average depth is greater than the second average depth, and
wherein the second average depth is greater than the third average depth.

14. The spacer shim according to claim 13,
wherein the first section and the third section each have substantially a same trench depth along a flow direction of the coating solution, and
wherein the second section has a trench depth gradually decreasing along the flow direction of the coating solution.

15. The spacer shim according to claim 13,
wherein a trench depth of the third section is substantially equal to a depth of the first discharge trench and the second discharge trench.

16. The spacer shim according to claim 1,
wherein the trenches that constitute the flow path have a round bottom when viewed in a cross section perpendicular to a flow direction of the coating solution.

17. The spacer shim according to claim 1,
wherein the spacer shim has at least one fastening hole penetrating the shim body not to overlap the flow path.

18. The spacer shim according to claim 1,
wherein the spacer shim includes a coating layer formed on an exposed surface of the flow path in the thickness direction of the shim body.

19. The spacer shim according to claim 18,
wherein the coating layer contains polytetrafluoroethylene.

20. A slot die coater, comprising:
at least one spacer shim according to any one of claims 1 to 19;
a first slot die block coupled to one side of the shim body to face an exposed surface of the flow path in the thickness direction of the shim body;
a second slot die block coupled to the other side of the shim body to face the first slot die block; and
a coating solution supply unit configured to communicate with the inflow trench of the spacer shim.

21. The slot die coater according to claim 20.
wherein the slot die coater includes at least one pump configured to independently supply a coating solution through a coating solution supply unit communicated with the inflow trench of each spacer shim.

22. A coating method comprising:
preparing a substrate having a pair of short sides and a pair of long sides extending between the pair of short sides;
forming a plurality of first coating layers at predetermined intervals on one surface of the substrate along a long side direction, so that a band-shaped uncoated portion extending along the long side direction is formed between the first coating layers adjacent in a short side direction;
preparing the slot die coater according to claim 20; and
forming a second coating layer along the long side direction to cover a boundary between each first coating layer and the uncoated portion adjacent thereto to a predetermined width using the slot die coater.

23. The coating method according to claim 22,
wherein the second coating layer is formed simultaneously as a pair at the boundary between the uncoated portion and a pair of first coating layers facing the uncoated portion.

24. The coating method according to claim 22,
wherein the substrate is a metal foil current collector,
wherein the first coating layer is an active material coating layer, and
wherein the second coating layer is an insulating coating layer.
